(19)

Europäisches
Patentamt
European
Patent Office
Office européen
des brevets

(11) **EP 2 530 623 A1**

(12) **EUROPEAN PATENT APPLICATION**

(43) Date of publication:
05.12.2012 Bulletin 2012/49

(21) Application number: 11168098.9

(22) Date of filing: 30.05.2011

(51) Int Cl.:
*G06K 9/46* (2006.01)　　　*G06K 9/00* (2006.01)
*G06K 9/62* (2006.01)　　　*G06T 7/00* (2006.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: **Technische Universität München**
**80333 München (DE)**

(72) Inventors:
• **Cremers, Daniel**
**80939 München (DE)**

• **Aubry, Mathieu**
**36000 Chateauroux (FR)**
• **Schlickewei, Ulrich**
**81543 München (DE)**

(74) Representative: **Lucke, Andreas**
**Boehmert & Boehmert**
**Pettenkoferstrasse 20-22**
**80336 München (DE)**

(54) **Wave kernel signature for feature description**

(57)　　　A feature descriptor or shape signature based on a solution to a Schrödinger differential equation allows to determine correspondences between graph structures and to analyse the properties of individual nodes in a graph with a high level of discriminativeness. In particular, the feature descriptor according to the present invention allows to clearly separate influences of different spatial scales and allows to treat all scales equally. An appropriate parameterization of the feature descriptor may be achieved through a theoretical stability analysis. The feature descriptor according the present invention may be employed for a shape analysis, shape segmentation, and shape retrieval, or whenever the properties of individual nodes in a graph need to be analysed to characterize the relation to the remainder of the graph, such as in the analysis of computer networks.

EP 2 530 623 A1

**Description**

Field of the Invention

The present invention relates to a method and system for representing a graph corresponding to a physical object by means of a feature descriptor. In particular, the invention relates to a method and system for representing a shape of a surface of an object by means of a shape signature.

Background and Relevant State of the Art

In image processing and automated shape analysis, often one would like to reliably identify an object by analyzing its surface structure, and comparing it to images of the same object in a different pose. For instance, an industrial robot in a manufacturing plant may try to identify and retrieve objects by optically sensing their shapes, and by then comparing these shapes against a plurality of shapes stored in a database. However, the robot may not always approach these objects from a position that corresponds to the pre-stored pose, making shape identification a difficult task. The geometric shape of these objects may be given in terms of its bounding surface, whose discrete representation may be a mesh or point set. Such representations are very convenient for rendering and visualization applications, but are not very suitable for comparing the shape of an object against a shape stored in memory of that same object, but in a different pose. Similar challenges arise in automated face recognition, or in the analysis of medical image data.

Feature descriptors provide a simplified characterization of the shape of an object, or more generally a graph or mesh, and may hence help to identify or to retrieve a shape or an object. For the specific example of shape analysis, feature descriptors are sometimes called point signatures or shape signatures. They ought to characterize each point on the surface of an object regarding its relations to the entire shape. Effective shape signatures should capture some global geometric properties which are invariant under scaling, translation, and rotation. They may be used as a fast indexing mechanism for shape retrieval or to identify potential correspondences among pairs of points in shape matching.

Existing descriptors can roughly be divided into two classes according to the level of invariance they have. The more classical approaches like Shape Context or Spin Images are invariant under rigid motion. Such descriptors also include Integral Invariants, Multi-Scale Local Signature, and the Point-Aware Metric.

More recently, researchers have considered descriptors which are invariant under non-rigid motion. Examples are discussed in H. Ling and D. Jacobs, "Shape Classification Using the Inner-Distance", IEEE Trans. Pattern Anal. Mach. Intell. (PAMI) 29(2):286-299 (2007) 2, who employ ideas similar to the shape context in a geodesic distance framework. Lipman *et al.* have suggested to compare neighbourhoods of points in the framework of conformal geometry, cf. Y. Lipman, T. Funkhouser, "Möbius voting for surface correspondence", ACM Trans. Graph. (TOG) 28(3) (2009) 2 and Y. Lipman, I. Daubechies, "Surface Comparison With Mass Transportation", ArXiv: 0812-3488.

Techniques based on the spectrum of the Laplace-Beltrami operator of the surface were introduced into geometry processing by B. Lévy, "Laplace-Beltrami eigenfunctions: Towards an Algorithm That "Understands" Geometry", SMI 2006 2. Rustamov used the Laplace eigenfunctions to define an embedding of the surface in the space of convergent sequences $1^2(R)$, cf. R. Rustamov, "Laplace-Beltrami eigenfunctions for deformation invariant shape representation", in Proc. SGP 2007 2. This embedding has the nice property of containing all intrinsic information of each point. However, it depends on the choice of a basis of eigenfunctions. Even in the case of non-repeated eigenvalues of the Laplace-Beltrami operator, there is a sign to choose for each component.

Some of these problems could be overcome by employing the heat equation and so-called Heat Kernel Signatures (HKS) introduced by J. Sun, M. Ovsjanikov, L. Guibas, "A Concise and Provably Informative Multi-Scale Signature Based on Heat Diffusion", Comput. Graph. Forum (CGF) 28(5), 1383-1392 (2009) 2, 6 and K. Gebal, J. Baerentzen, H. Aanaes, R. Larsen, "Shape Analysis Using the Auto Diffusion Function", Comput. Graph. Forum (CGF) 28(5), 1405-1413 (2009) 2. A scale invariant version has been provided by M. Bronstein, I. Kokkinos, "Scale-invariant heat kernel signatures for non-rigid shape recognition", in Proc. ECCV 2010 2,5.

The Heat Kernel Signature is based on analysing the heat diffusion process on the shape, which is governed by the heat equation,

$$\frac{\partial u}{\partial t}(x,t) = \Delta u(x,t), \tag{1}$$

wherein $\Delta$ = div grad denotes the Laplace-Beltrami operator.

The idea underlying the HKS is that a source of heat is initialized at the point of interest, and is then let to diffuse over time to neighbouring nodes. Subsequently, one can characterize how much heat remains in the point under consideration after a certain time t. More formally, suppose that at time t = 0 all the heat energy is concentrated in a point x. Which amount of heat energy remains at the same point x for time t > 0? The mathematical solution to this problem is:

$$HKS(X, t) = k_t(x,x), \tag{2}$$

where $k_t$ is the so-called heat kernel:

$$k_t(x,y) = \sum_{k=1}^{\infty} e^{-E_k t} \phi_k(x) \phi_k(y), \tag{3}$$

wherein $E_0 = 0 < -E_1 \leq -E_2, \ldots$ denote the eigenvalues of the Laplace-Beltrami operator $\Delta$, $\phi_k(x)$ denote the corresponding normalized eigenvectors (eigenfunctions).

Despite its success and elegant physical interpretation, the Heat Kernel Signature approach to shape analysis suffers from a number of drawbacks:

- The HKS-values obtained for different time parameters are highly correlated in an intransparent way, mixing information from various frequencies and thereby from various spatial scales. Local and global information are not separated. This makes it hard to extract any task-specific information.
- The HKS is highly dominated by the small eigenvalues of the Lapalce-Beltrami operator, which are associated with the macroscopic properties of the shape. The exponential factor in Eq. (3) suppresses the contributions of the larger eigenvalues in the heat kernel. This may be devastating for applications in which small scale information plays a crucial role, such as high precision matching.
- The time parameter and its discrete version play a central role in the HKS kernel. Yet although it is related to scale, it does not have any straightforward physical interpretation in terms of the properties of the shape itself. Thus, the appropriate choice of the time segment and of a logarithmic discretization is a purely heuristic choice validated merely by experiments.

The problem of providing a simplified characterization of an extended object or group of objects is not limited to shape analysis, but arises in other contexts, too. A well-established technique in various fields of physics and network engineering to represent the relation between different physical objects or entities is a graph representation, wherein each object or entity is associated with a node of a graph. Edges between said nodes may represent relations between these entities. A surface of a physical object may be represented as a graph by discretizing the surface, wherein nodes of the graph correspond to points or positions on the surface, and edges characterize their distance or connections. Discretizing a surface into a map or mesh is common in automated image processing. Hence, the problem of shape analysis can be considered a special instance of the problem of graph analysis.

Another example is a network of computers, wherein each node represents one computer and the edges represent data connections between these computers, with edge rates corresponding to (inverses of) capacities of the respective data connections. For such a network, one may want to estimate the probability that a given computer is infected by a virus. In a network of mail servers, one may want to predict the average load of a server. All these properties depend on the relation of the node under consideration to the remaining nodes of the system.

In these applications, feature descriptors may provide a compact and simplified representation of the graph. Ideally, they should uniquely describe each point. Yet, they should be invariant or robust to certain perturbations of the entire system.

Hence, in view of the prior art there is a need for an improved feature descriptor that resolves the limitations of the HKS approach and allows to prevent a mixing of information from various spatial scales and a suppression of small eigenvalues.

Overview of the present invention

This objective is achieved by a method and a system for representing a graph by means of a feature descriptor according to independent claims 1 and 14, respectively. The dependent claims relate to preferred embodiments.

A method according to the present invention is a method for representing a graph, in particular for representing the shape of a surface of an object by means of a feature descriptor, wherein said feature descriptor comprises a solution to a Schrödinger differential equation for a particle on said graph, in particular on said surface.

Said feature descriptor may be based on a solution to a Schrödinger differential equation, or may be computed in terms of or given as a function of a solution to a Schrödinger differential equation.

It is the realization underlying the present invention that many of the problems of the conventional HKS approach can be resolved by employing Schrödinger's equation instead of the heat equation as a basis for the feature descriptor. Schrödinger's equation is the fundamental equation governing quantum physics, but has not yet been applied much to microscopic problems. In order to distinguish the invention from the conventional Heat Kernel Signature (HKS), the shape signature according to the present invention will henceforth be denoted Wave Kernel Signature (WKS). Physically, the WKS represents the average probability of measuring a quantum mechanical particle at a specific location.

The inventors found that in contrast to the Heat Kernel Signature, the Wave Kernel Signature clearly separates the influence of different spatial scales, being a function of energy rather than time.

In the WKS approach according to the present invention, all eigenvalues are treated equally and hence the small scale information is fully preserved. In comparison with HKS, this allows a more precise shape matching.

Like the HKS, the WKS is invariant under isometries and robust to small non-isometric deformations.

The appropriate choice of parameterisation of the WKS arises naturally from a theoretical stability analysis. As a consequence, appropriate parameter choices need not be hand-tuned.

These properties make the WKS well-suited for large variety of the applications and, in particular, allow for a substantially more discriminative and better feature matching than what can be achieved with the conventional HKS approach, as will be demonstrated in more detail in the description of the specific embodiments.

A graph in the sense of the present invention may be understood as an abstract representation of a set of objects, wherein some pairs of the objects are connected by links. The interconnected objects may be represented by mathematical abstractions called vertices, and the links that connect said vertices may be called edges. In particular, said graph may be a mesh.

A physical object in the sense of the present invention may, for instance, be a network system or a commercial article to be sensed and identified in a warehouse or manufacturing plant. A physical object may also be a (human or animal) figure or part of said figure, such as a human face in face recognition applications. Geometric shapes may be given in terms of their bounding surface, whose discrete representation may correspond to a mesh, or a graph. In this sense, the notion of graph according to the present invention also encompasses a (continuous or discretized) shape of at least part of a surface of an object, and the feature descriptor may correspond to a shape signature. In this instance, the present invention hence relates to a method of representing a shape of at least part of a surface of an object by means of a feature descriptor, in particular by means of a point signature or a shape signature, wherein said feature descriptor comprises a solution to a Schrödinger differential equation for a particle on said surface.

Said surface may be a continuous or a discrete surface, and said Schrödinger differential equation may hence be a continuous or a discrete Schrödinger equation, respectively.

In an instance of the preferred embodiments that will now be described, as well as in the appended set of claims, "graph" may hence be replaced by "shape of at least part of a surface of an object", and said Schrödinger differential equation may be a Schrödinger differential equation for a particle "on said surface".

In a preferred embodiment, computing said feature descriptor may comprise a step of computing a time-average in terms of said solution to said Schrödinger equation. In particular, said time average may be a time-average of the squared absolute value of said solution.

The inventors found that by computing a time-average, the time parameter that may not have an unambiguous physical interpretation in graph analysis can be conveniently eliminated and can effectively be replaced by an energy parameter that allows to better separate the influence of the different spatial scales, thereby allowing for more accurate feature discrimination.

In a preferred embodiment, said solution to said Schrödinger equation comprises at least an eigenvector or eigenfunction of a Laplace-Beltrami operator defined for said graph, wherein said eigenvector or eigenfunction is weighted with a complex phase and/or an energy distribution factor. In particular, said Schrödinger equation may be based on or may be computed in terms of at least an eigenvector or eigenfunction of said Laplace-Beltrami operator, wherein said eigenvector or eigenfunction is weighted with a complex phase and/or an energy distribution factor.

The complex phase according to the foregoing embodiment may in effect replace the exponential scaling factor in the heat kernel of Eq. (3) according to the conventional HKS approach. In contrast to the exponential scaling factor, the complex phase ensures that all eigenvalues are treated equally, and prevents the large eigenvalues from being suppressed.

The energy distribution factor allows to tune the feature descriptor such that high discriminativeness can be achieved. The energy distribution factor may be a factor of a one-dimensional probability distribution. While this variable may have a physical interpretation as an energy parameter in a quantum mechanical framework, the terminology is chosen only for illustrative purposes and for ease of interpretation, and it is understood that in the method according to the present invention, said "energy" variable may not directly represent an energy in any physical sense.

According to a preferred embodiment, said solution to said Schrödinger equation comprises (is based on/is computed in terms of) a sum of eigenvectors or eigenfunctions of a Laplace-Beltrami operator defined for said graph, wherein each of said eigenvectors or eigenfunctions is weighted with a complex phase and/or an energy distribution factor. In particular, said sum may be a sum of all the eigenvectors or eigenfunctions of said Laplace-Beltrami operator.

In a preferred embodiment, said feature descriptor comprises (is based on/is computed in terms of) at least a squared absolute value of an eigenvector or eigenfunction of a Laplace-Beltrami operator defined for said graph, wherein said eigenvector or eigenfunction is weighted with an energy distribution factor.

In a further preferred embodiment, said feature descriptor comprises (is based on/is computed in terms of) a sum of squared absolute values of eigenvectors or eigenfunctions of a Laplace-Beltrami operator defined for said graph, wherein each of said eigenvectors or eigenfunctions is weighted with an energy distribution factor. In particular, said sum may be a sum over all said eigenvectors or eigenfunctions of said Laplace-Beltrami operator.

Said energy distribution may be a log-normal distribution. The inventors found that a log-normal distribution is particularly suitable for modelling the distribution of energy values that can be expected to result when the surface under consideration is slightly deformed in a non-isometric way.

In a preferred embodiment, said feature descriptor may be given in terms of a position x on said graph and an energy parameter E as

$$WKS(x,E) := C_E \sum\nolimits_k \phi_k^2(x) \exp\left( \frac{-\left( \log E - \log E_k \right)^2}{2\sigma^2} \right) \tag{4}$$

with

$$C_E := \left( \sum\nolimits_k \exp\left( \frac{-\left( \log E - \log E_k \right)^2}{2\sigma^2} \right) \right)^{-1}, \tag{5}$$

wherein $\phi_k$ denotes the k-th eigenvector or eigenfunction of the Laplace-Beltrami operator on said graph, $E_k$ denotes the corresponding eigenvalue, and $\sigma$ denotes a standard variation of a normal (Gaussian) distribution.

Said Schrödinger equation may be a Schrödinger equation of a free particle on said graph.

In a preferred embodiment, said Schrödinger equation may be a Schrödinger equation of a single particle on said graph.

The method according to the present invention may further comprise a step of comparing a feature descriptor, in particular a shape signature of a first point corresponding to a first shape with a feature descriptor, in particular a shape signature of a second point corresponding to a second shape. Said step of comparing said feature descriptors or shape signatures may comprise a step of computing a distance between said feature descriptors or shape signatures.

The inventors found that the Wave Kernel Signature according to the present invention allows for a particularly effective shape matching, in which correspondences among pairs of points may be computed in terms of said distance between shape signatures.

Preferably, said distance may be a $L_1$-distance or a $L_2$-distance.

Computing said distance may comprise the step of computing an integral over an energy parameter. Computing an integral over the energy parameter makes sure that all scales are taken into account.

The method according to the present invention may further comprise a step of comparing said feature descriptor of said graph against corresponding feature descriptors of a plurality of graphs stored in a database.

In particular, the method according to the present invention may comprise the step of comparing said feature descriptor or shape signature of a given shape against corresponding feature descriptors or shape signatures of a plurality of shapes stored in said database. The inventors found that a clear scale separation and enhanced discriminativeness make the Wave Kernel Signature particularly well-suited for shape retrieval.

The method according to the present invention may further comprise the step of analyzing a physical object and/or providing a description of at least a part of said object in terms of a graph, a mesh and/or a shape.

Said step of analyzing said object may comprise a step of sensing said object. Sensing may comprise optical sensing.

Said step of providing a description of said object may comprise a step of providing a data set relating to said object, and converting said data set into a graph, a mesh, and/or a shape.

The method according to the present invention may also comprise the step of retrieving a data set providing a description of at least a part of a physical object, in particular from a database, and converting said data set into a graph, a mesh, and/or a shape.

The present invention also relates to a storage medium for use in a computer device, wherein said storage medium comprises instructions stored therein, such that, when said instructions are read in said computer device, said computer device implements a method with some or all of the features described above.

Moreover, the present invention relates to a system for representing a graph whose nodes each correspond to at least part of physical objects and whose edges correspond to links between said physical objects, wherein said system is adapted to represent said graph by means of a feature descriptor, said system being further adapted to compute said feature descriptor in terms of a solution to a Schrödinger differential equation for particle on said graph.

Said system may be further adapted to implement a method with some or all of the features as described above.

Detailed Description of Preferred Embodiments

The features and numerous advantages of the method and system according to the present invention will best be understood from a detailed description of the accompanying drawings, in which:

| | |
|---|---|
| Fig. 1a | shows the distance between the descriptor of a point in a reference shape and the descriptor of other points in the same shape and in a de-formed shape for an example of a human figure calculated employing the HKS approach according to the state of the art; |
| Fig. 1b | shows the corresponding distance between descriptors in a reference shape and deformed shape computed according to the WKS approach according to the present invention; |
| Figs. 2a, 2b and 2c | compare the feature descriptors of the reference point shown in Figs. 1a and 1b as a function of a logarithmic energy parameter, both for the HKS and scaled HKS approach according to the state of the art and ac-cording to the WKS approach according to the present invention; |
| Fig. 3 | shows a quantitative comparison of the matching performance of HKS and WKS in terms of the hit rate; |
| Fig. 4 | illustrates a shape matching of a human figure in two different poses according to the present invention with the WKS approach; and |
| Fig. 5 | illustrates an unsupervised segmentation of deformable shapes employ-ing the WKS approach according to the present invention. |

(α) WKS feature descriptor

A feature descriptor for shape analysis may characterize each point on the surface of an object in terms of its relation to the entire shape. The key idea is to associate with each point on a surface, such as a surface in $R^3$, a feature vector in $R^n$, or more generally a scalar function on R which ideally contains all the relevant local and global information about this point. In other words, a feature descriptor may be understood as a mapping from a surface or graph to a vector or scalar function, associating such a vector or scalar function to each point on the surface or node in the graph. In shape analysis, feature descriptors are sometimes called "point signatures" or "shape signatures".

In the present invention, a novel feature descriptor is introduced which emerges from treating the system in the formalism of quantum mechanics. The underlying idea is to consider a particle of a given energy distribution and to define for each point or entity a Wave Kernel Signature (WKS), which may be defined as a time average probability that the particle is located at that particular point.

The evolution of a quantum particle on the surface is governed by the Schrödinger equation

$$\frac{\partial u}{\partial t}(x,t) = i\Delta u(x,t), \tag{6}$$

wherein $i$ denotes the imaginary unit and $\Delta := \text{div grad}$ is the Laplace-Beltrami operator on the surface.

The surface on which the Schrödinger equation is defined may be part of an outer surface of an object to be analysed. In some applications such as in the analysis or recognition of human faces, this may not be a closed surface. In this case, von Neumann boundary conditions may be imposed.

Equation (6) is superficially similar to the heat equation (1). However, the induced dynamics are drastically different and comprise oscillations rather than a mere dissipation.

The Green's function of the Schrödinger equation — also called the propagator — governing the temporal evolution of a Delta function is given by:

$$k_t(x,y) = \sum_{k=0}^{\infty} e^{-iE_k t}\phi_k(x)\phi_k(y), \tag{7}$$

wherein $-E_k$ denote the eigenvalues of the Laplace-Beltrami operator $\Delta$, and $\phi_k(x)$ denote the corresponding normalized eigenfunctions.

In contrast to the heat kernel in Eq. (3), the above sum does not necessarily converge, which reflects the fact that according to Heisenberg's uncertainty principle a particle cannot have both an exact location and an exact energy: $\Delta x \Delta E \geq \frac{1}{2}$, where $\Delta$ refers to the uncertainty in location or energy. For this reason, the inventors found it preferable to introduce a suitable energy distribution $f_E^2$ into the solution to Schrödinger's equation rather than to use the propagator in Eq. (7) directly as a shape signature.

For a particle with energy distribution $f_E^2$ (thereby allowing an energy uncertainty), the wave function solving Schrödinger's Equation (6) may be expressed as a superposition of eigenenergy states,

$$\psi_E(x, t) = \sum_{k=0}^{\infty} e^{-iE_k t}\phi_k(x)f_E(E_k). \tag{8}$$

Physically, this corresponds to the following experiment: A particle is prepared on the surface, and at $t = 0$ its energy E is measured with an uncertainty described by $f_E^2$. The probability density to measure this particle in location x at time t is then given by $|\varphi_E(x,t)|^2$.

The time parameter in Equation (8) has no direct or straightforward interpretation in the characteristics of the shape to be analyzed. The inventors found that the energy parameter in Equation (8) provides a more intuitive approach to shape analysis, since the energy is directly related to the eigenvalues of the Laplace-Beltrami operator and therefore to an intrinsic notion of scale in the shape. The time variable may be eliminated by defining the Wave Kernel Signature (WKS) as the average probability over time to measure a particle at position x,

$$WKS(E,x) = \lim_{T \to \infty} \frac{1}{T} \int_0^T |\Psi_E(x,t)|^2. \tag{9}$$

Assuming that the shape has no repeated eigenvalues (which is the general case), since the functions of $e^{-iE_k t}$ are orthogonal for the $L_2$ norm, we have:

$$WKS(E,x) = \sum_{k=0}^{\infty} \phi_k(x)^2 f_E(E_k)^2. \qquad (10)$$

In order to derive a descriptor that characterizes the properties of the shape at different scales independently, a suitable energy distribution $f_E$ shall be selected in Equation (10).

If there are only finitely many eigenvalues and eigenvectors, such as for a particle on a fine mesh or graph, the sum will in general be finite in Eq. (7), Eq. (8) and Eq. (10).

The inventors found that an appropriate energy distribution $f^2_E$ may be found from a perturbation analysis. The idea underlying the choice of the energy distribution is that the descriptor shall be as informative as possible, but should at the same time be robust to small non-isometric perturbations to the surface under consideration.

Assume that the surface X is slightly deformed in a non-isometric way. Such a deformation can be interpreted as a perturbation g of the metric g on X. Assume that the deformation is bounded in the sense that $\left\| \tilde{g} - g \right\|_g < \varepsilon$ for some small $\varepsilon > 0$, where we use the metric $\| \cdot \|_g$ on T* X $\otimes$ T* X induced by g. For simplicity, it will be assumed that in this example the Laplace-Beltrami operator $\Delta_g$ corresponding to g has no repeated eigenvalues.

The inventors found that the eigenvalues of the deformed Laplace-Beltrami operator $\Delta_{\tilde{g}}$ depend continuously on $\tilde{g}$ : If $\tilde{E}_k$ denotes the eigenvalue of $\Delta_{\tilde{g}}$ corresponding to $E_k$, then for g small enough $\varepsilon$,

$$\left| \tilde{E}_k - E_k \right| \le C E_k \cdot \varepsilon + O(\varepsilon^2), \qquad (11)$$

where C is a constant which depends only on X and g.

This implies that there exist coefficients $c_k$ with $|c_k| \le C$ such that

$$\tilde{E}_k = (1 + \varepsilon c_k) E_k + O(\varepsilon^2), \qquad (12)$$

Equation (12) can be reformulated as

$$\log\left( \frac{\tilde{E}_k}{E_k} \right) = \log(1 + \varepsilon c_k + O(\varepsilon^2)) = \varepsilon c_k + O(\varepsilon^2). \qquad (13)$$

If the deformations are independently distributed, one may assume $c_k$ to be normally distributed random variables with zero mean. In view of Eq. (13), this implies

$$\log(\tilde{E}_k) \sim N(\log(E_K), \sigma).$$

(14)

With these insights from the perturbation-theoretical analysis and Equation (14), the inventors found it useful to choose the Wave Kernel Signature at a point $x \in X$ as a real-valued function in the logarithmic energy scale $e := \log(E)$,

$$\mathrm{WKS}(x, \cdot) : \mathbb{R} \to \mathbb{R},$$

$$WKS(x, e) := C_e \sum_k \phi_k^2(x) e^{\frac{-(e - \log E_k)^2}{2\sigma^2}}$$

(15)

$$C_e = \left( \sum_e e^{\frac{-(e - \log E_k)^2}{2\sigma^2}} \right)^{-1}$$

(16)

The sum is over all eigenfunctions in Eq. (4) and Eq. (5).
The Wave Kernel Signature in Equations (9), (10), and (15) has a number of properties that make it well-suited for shape analysis and shape comparison:

- The WKS is *intrinsic* in the sense that it is invariant to non-rigid motions, i.e. if $T : X \to Y$ is an isometry, i.e. a map under which geodesic distances on the shape are preserved, then $WKS(x,e) = WKS(T(x),e)$ for all $x \in X$.
  The WKS *characterizes points uniquely up to isometries.* More precisely, if $T : X \to Y$ is a homeomorphism which satisfies for all $x \in X, y \in X$ and for all $e$ the equality

$$WKS(x, e) = WKS(T(x), e),$$

(17)

then T is an isometry.

- Since it is a function of energy levels which are directly related to scales, the Wave Kernel Signature has a *natural notion of scale.* Large energies are associated with highly oscillatory particles which are mostly influenced by the local geometry, whereas small energies correspond to properties induced by the global geometry.

- By construction, the WKS in equation (15) is stable under perturbations of the shape.

The inventors further found that the WKS according to the present invention can easily be made scale-invariant by following the approach for the Heat Kernel Signature discussed in M. Bronstein, I. Kokkinos, "Scale-invariant heat kernel signatures for non-rigid shape recognition", Proc. ECCV 2010, 2,5.
The Wave Kernel feature descriptor according to the present invention may be applied with great advantage in many applications in non-rigid shape analysis.
In *shape matching,* the descriptor may be used for detecting potential correspondences among pairs of points on either shape. In *shape segmentation,* the descriptor may serve for clustering shapes into semantically coherent parts.

In *shape retrieval,* distributions of descriptors may be used as shape signatures allowing to represent the shape as a collection of "geometric words".

To compare Wave Kernel Signatures for different locations $x \in X$ and $y \in Y$ on respective shapes X and Y, such as for shape matching, a distance between said points x, y may be defined employing the $L_1$-norm of a normalized signature difference,

$$d_{WKS}(x, y) = \int_{e_{min}}^{e_{max}} \left| \frac{WKS(x,e) - WKS(y,e)}{WKS(x,e) + WKS(y,e)} \right| de. \tag{18}$$

As an alternative to Equation (18), the inventors found that one may also weight different terms in the integral differently in order to bias the shape comparison to specific spatial scales. Likewise, norms other than the $L_1$-norm, such as the $L_2$-norm, may also be used to define a distance on said respective shapes X, Y.

### (β) Discrete Surfaces

For simplicity and ease of presentation, the WKS approach has so far been presented for continuous shapes, but is by no means limited thereto.

In many applications of shape analysis, surface data will be discretized, and the shape or surface may be represented as a mesh or grid. The approach according to the present invention applies just as well to discrete surfaces, substituting a discrete Laplace-operator defined on the mesh for the Laplace-Beltrami operator in Eq. (6).

There are various choices of discrete Laplace operators or discrete Schrödinger equations, depending on the mesh topology and desired application, as is well-known in the art. When practicing the invention, those skilled in the art will routinely choose from among these alternatives to select the Laplacian or Schrödinger equation that best fits their specific application and/or topology.

For instance, the Laplace-Beltrami operator on a triangle mesh may be discretized employing the cotan-scheme introduced in U. Pinkall, K. Polthier, "Computing Discrete Minimal Surfaces and their Conjugates", Exp. Math. 2(1): 15-36, 1993, and refined in M. Meyer et al., "Discrete Differential-Geometry Operators for Triangulated 2-Manifolds", VisMath 2002, as will now be summarized.

For a mesh *X*, one may consider a discrete function u = ($u_i$), where the index *i* runs over the vertices of the mesh. Denote by $A_i$ the area of the Voronoi cell of vertex *i* on *X,* as defined in Meyer *et al.* The Laplace-Beltrami operator *L* may then be defined as,

$$(L_u)_i := \frac{1}{2A_i} \sum_{j \sim i} \left( \cot \alpha_{ij} + \cot \beta_{ij} \right)\left( u_i - u_j \right), \tag{19}$$

wherein i~j if indices i and j are connected by an edge $e_{ij}$, and $\alpha_{ij}$ and $\beta_{ij}$ denote the angles opposite to the edge $e_{ij}$. Substituting the Laplace-Beltrami operator *L* from Eq. (19) for $\Delta$ in Eq. (6), the WKS may be defined in terms of the eigenvectors of *L* in the same way as described above.

### (γ) Further Applications

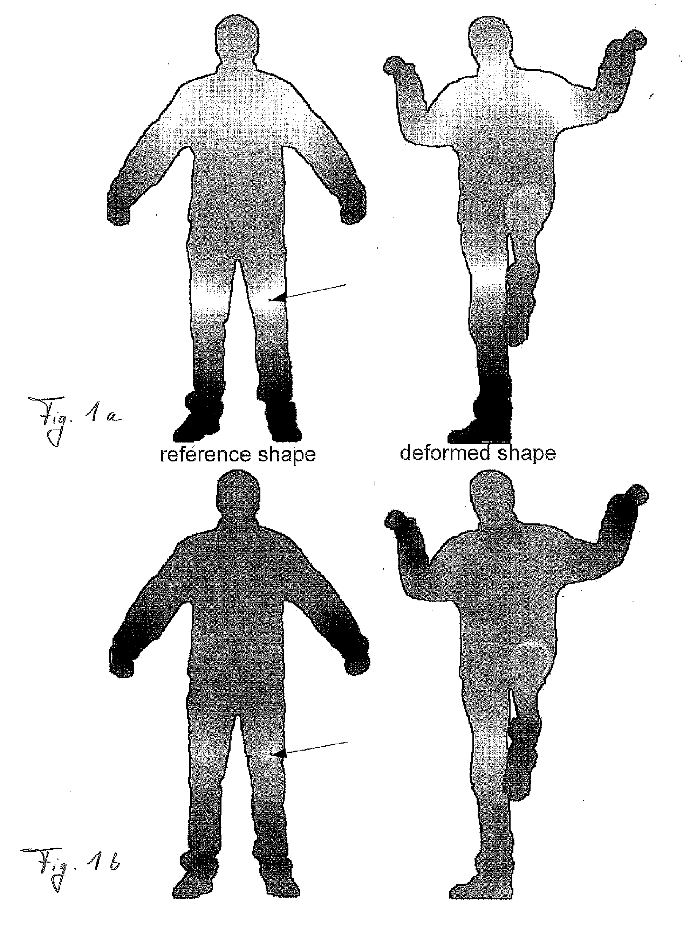

Fig. 1a shows the distance between the descriptor of a point in a reference shape of a human figure (on the leg, indicated by an arrow) and the descriptor of other points in the same reference frame (left) and in a deformed shape of the same figure (right) based on a conventional HKS approach. Light colours correspond to a smaller distance, whereas darker colours correspond to a large distance in Fig. 1a. Points with small distance would be generally identified as similar, whereas points with a larger distance would be considered clearly distinct. As can be taken from the deformed shape in Fig. 1a, the HKS approach identifies parts of the legs as similar to the reference point indicated by the arrow, as desired. But it also identifies parts of the upper body of the deformed shape as similar to the reference point on the leg, which could potentially lead to false matches.

Fig. 1b shows a corresponding comparison of the reference shape and deformed shape for a distance computed according to the WKS approach of the present invention. As can be seen from a comparison of Fig. 1b with Fig. 1a, the WKS approach provides a more accurate correspondence of points, in which the area of small distance (light colours) is highly localized around the correct point on the leg. In comparison to the HKS example in Fig. 1a, the shoulder and upper body are no longer identified as good candidates in the deformed shape, and hence the likelihood of false matches is significantly reduced.

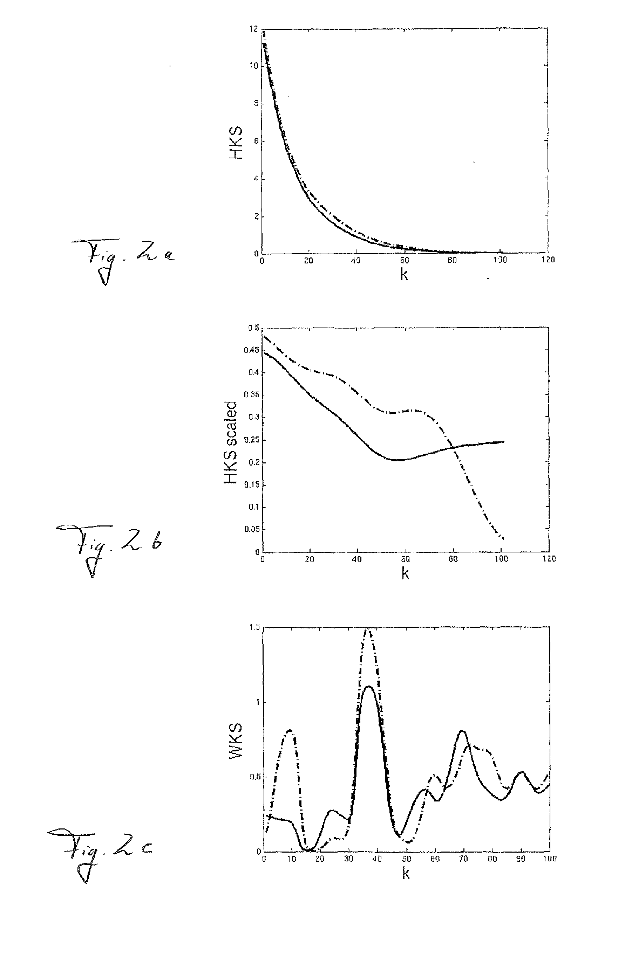

Figs. 2a to 2c are plots of feature descriptors of the reference point in the reference shape (solid line) and in the deformed shape (dash-dotted line) for the example of Fig. 1. Figs. 2a and 2b show the results obtained with the conventional HKS approach and a scaled version of the conventional HKS approach, respectively. In comparison, Fig. 2c shows the WKS feature descriptor according to the present invention.

The shape has changed from the reference shape (left) to the deformed shape (right) in Fig. 1, so signatures can be expected to change, too, and need not be identical. Yet one and the same point on the shape is analysed, and so the signatures should be sufficiently similar to allow for a reliable matching. As can be seen from a comparison of Fig. 2c with Figs. 2a and 2b, the approach according to the present invention captures more information including shape differences at finer scales. Since more details are captured, points can be distinguished more reliably. This explains the better performance of the WKS approach in the example of Fig. 1.

The HKS and WKS approaches may also be compared quantitatively in terms of the hit rate, i.e. the number of correctly identified matching correspondences of two different shapes. To this end, one may proceed as follows:

1. Detect feature points by means of farthest point sampling, i.e. sequentially detect the most distinguished feature points (those which are most distant in feature space). Both for HKS and WKS, these feature points typically coincide with characteristic surface locations that humans would select (i.e. the head, the hand, the foot, etc.).
2. For each feature point on one shape, select the $k$ best matches on the other shape for $k = 1, ..., 40.$
3. Determine the percentage of feature points for which the correct correspondent is among the $k$ best matches.

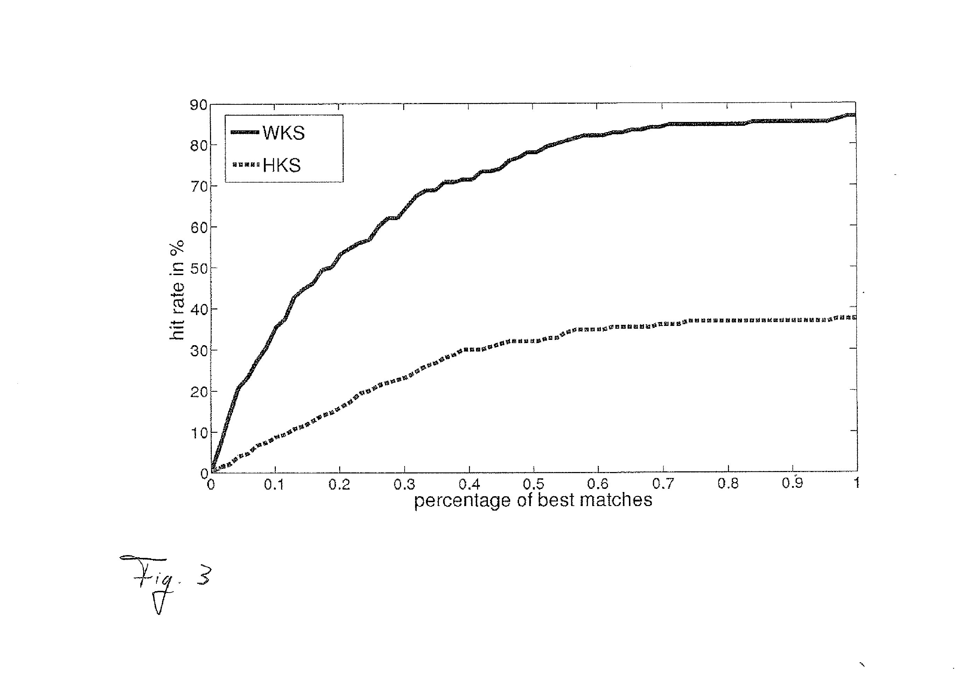

The plot in Fig. 3 shows the percentage of correctly identified correspondences as a function of the percentage of best matches, both for the HKS (lower curve) and the WKS according to the present invention (upper curve).

As can be taken from Fig. 3, the WKS approach outperforms the conventional HKS approach. For instance, the WKS approach identified the true correspondent among the first 1% of best matches in 87% of the cases, whereas the hit rate of the HKS remained below 40%.

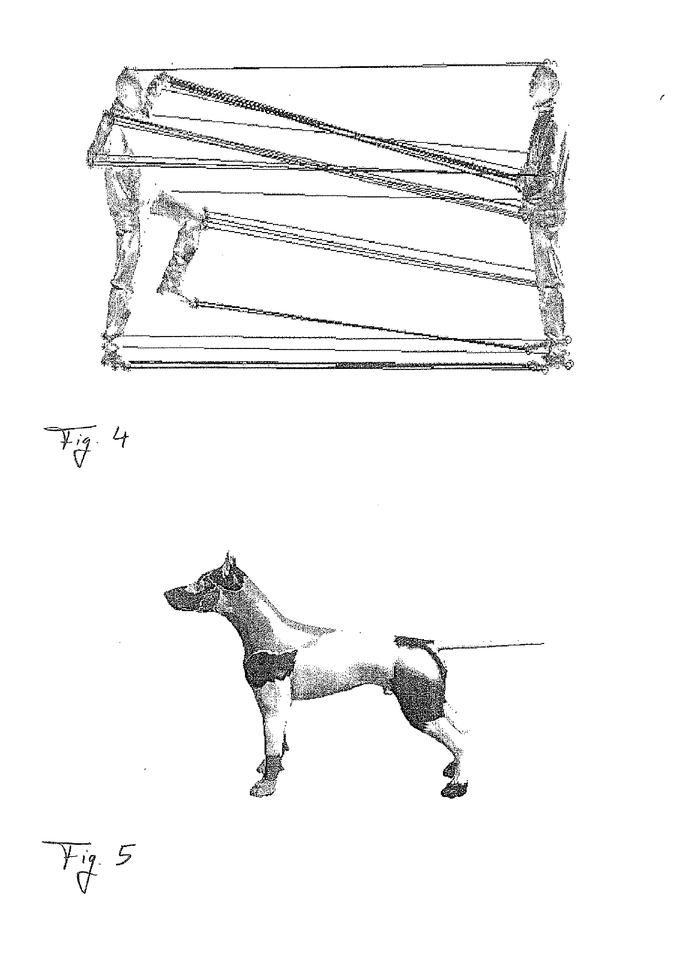

Estimating a dense spatially regular rise matching of two three-dimensional shapes is a difficult computational task. Yet the inventors found that the WKS feature descriptor according to the present invention is sufficiently informative so as to allow a computation of meaningful matches of even complicated 3D shapes. Fig. 4 illustrates matching results that have been achieved using the Wave Kernel Signature based on 40 feature points selected according to the following simple algorithm:

1. For both shapes select the $N$ most discriminative feature points.
2. For each feature point on one shape select the $k$ best matching features points on the other shape.
3. Select as first corresponding pair the one with smallest feature distance.
4. Iteratively match pairs of points for which the geodesic distances to the already matched points are most similar. This last aspect introduces a regularity into the matching.

The method according to the present invention may likewise be applied in shape segmentation, where the descriptor may serve for clustering shapes into semantically coherent parts. The inventors found that by employing the Wave Kernel Signature according to the present invention, clustering points of similar signature allows to automatically generate a partitioning of shapes into meaningful parts. This is illustrated in Fig. 5, which shows the segmentation of a dog shape from a training data set. The shape descriptors computed for all points on the dog shape have been approximated as a mixture of Gaussians. The estimated Gaussians are found to directly correspond to the respective parts of the shape. Moreover, a novel instance of a dog can be segmented by simply assigning each surface point to the closest cluster according to the Gaussian probabilities. As can be seen from Fig. 5, the automatically generated part decomposition is quite consistent with human notions of part structure. The inventors found that, surprisingly, the estimated clusters exhibit a strong spatial coherence even though the algorithm did not make use of spatial proximity but relied exclusively on the Wave Kernel Signatures according to the present invention.

(δ) General Graphs

The foregoing description has illustrated the method and system according to the present invention with specific applications from non-rigid shape analysis. However, as emphasized above, the present invention is by no means limited to shape analysis. Rather, the method and descriptor according to the present invention may be applied whenever a graph shall be represented in terms of the relations of individual nodes to the remainder of the graph. Hence, the present invention may be applied wherever the goal is to determine correspondences between graph structures or to analyse the properties of individual nodes in a graph. These include all those problems that have previously been treated using the heat diffusion approach and the Heat Kernel Signature. Examples are described in R. Coifman et al., "Geometric Diffusions as a Tool for Harmonic Analysis and Structure Definition of Data. Part I: Diffusion Maps", Proc. of Nat. Acad. Sci. (PNAS), 102, 7426-7431 (2005) 2.

For a weighted graph $G = (V, E, w: E \rightarrow R)$ and a function $u = (u_i)_{i \in V}$ on G, the graph Laplacian L may for instance be defined as

$$(Lu)_i := \sum_{j \sim i} w_{ij}(u_i - u_j), \tag{20}$$

where $i \sim j$ if $(i,j) \in E$, and $w_{ij} = w(i,j)$ is the weight of the corresponding edge.

The operator $L$ being symmetric, it can be diagonalized. Hence, substituting $L$ according to Eq. (20) for the Laplace-Beltrami $\Delta$ operator in Eq. (6), the feature descriptor can be defined in terms of the eigenvalues of $L$, just as described above for the triangle mesh.

An example of an interesting weighted graph would be a computer network where nodes are given by the computers, edges are induced by the network structure and weights are chosen inversly proportional to the channel capacities.

A further interesting example would be a point cloud of measured data with graph structure induced by the k-nearest-neighbour-paradigm and edge weights chosen inversely proportional to the Euclidean distance of the data points.

Another example lies in angiography, where blood vessels may be characterized or represented by a graph.

The specific embodiments and the accompanying figures mere serve to illustrate the present invention and should not be understood in a limiting sense. The scope of the invention is to be determined solely on the basis of the appended claims.

**Claims**

1. A method for representing a graph whose nodes each correspond to at least part of physical objects and whose edges correspond to links between said physical objects, in particular for representing the shape of a surface of an object, wherein said graph, in particular said surface is represented by means of a feature descriptor, said feature descriptor comprising a solution to a Schrödinger differential equation for a particle on said graph, in particular on said surface.

2. The method according to claim 1, wherein computing said feature descriptor comprises a step of computing a time-average in terms of said solution to said Schrödinger equation.

3. The method according to any of the preceding claims, wherein said solution to said Schrödinger equation comprises at least an eigenvector of a Laplace-Beltrami operator defined for said graph, wherein said eigenvector is weighted with a complex phase and/or an energy distribution factor.

4. The method according to any of the preceding claims, wherein said solution to said Schrödinger equation comprises a sum of eigenvectors of a Laplace-Beltrami operator defined for said graph, wherein each said eigenvector is weighted with a complex phase and/or an energy distribution factor.

5. The method according to any of the preceding claims, wherein said feature descriptor comprises at least a squared absolute value of an eigenvector of a Laplace-Beltrami operator defined for said graph, wherein said eigenvector is weighted with an energy distribution factor.

6. The method according to any of the preceding claims, wherein said feature descriptor comprises a sum of squared absolute values of eigenvectors of a Laplace-Beltrami operator defined for said graph, wherein each said eigenvector is weighted with an energy distribution factor.

7. The method according to any of the claims 3 to 6, wherein said energy distribution is a log-normal distribution.

8. The method according to any of the preceding claims, wherein said feature descriptor is given in terms of a position x on said graph and an energy parameter $E$ as,

$$WKS(x,E) := C_E \sum_k \phi_k^2(x) \exp\left( \frac{-\left( \log E \; - \log E_k \right)^2}{2\sigma^2} \right)$$

with

$$C_E := \left( \sum_k \; \exp\left( \frac{-\left( \log E \; - \log E_k \right)^2}{2\sigma^2} \right) \right)^{-1} \; ,$$

wherein $\phi_k$ denotes the k-th eigenvector of the Laplace-Beltrami operator on said graph, $E_k$ denotes the corresponding eigenvalue, and $\sigma$ denotes the standard variation of a normal distribution.

9. The method according to any of the preceding claims, wherein said Schrödinger equation is a Schrödinger equation of a free particle on said graph.

10. The method according to any of the preceding claims, wherein said Schrödinger equation is a Schrödinger equation of a single particle on said graph.

11. The method according to any of the preceding claims, further comprising a step of comparing a feature descriptor, in particular a shape signature of a first point corresponding to a first shape with a feature descriptor, in particular a shape signature of a second point corresponding to a second shape, wherein said step of comparing said feature descriptors or shape signatures comprises a step of computing a distance between said feature descriptors or shape signatures.

12. The method according to claim 11, wherein said distance is an $L_1$-distance or an $L_2$-distance, and computing said distance comprises a step of computing an integral over an energy parameter.

13. The method according to any of the preceding claims, further comprising a step of comparing said feature descriptor of said graph against corresponding feature descriptors of a plurality of graphs stored in a database.

14. A system for representing a graph whose nodes each correspond to at least part of physical objects and whose edges correspond to links between said physical objects, wherein said system is adapted to represent said graph by means of a feature descriptor, said system further adapted to compute said feature descriptor in terms of a solution to a Schrödinger differential equation for a particle on said graph.

15. The system according to claim 14, wherein said system is further adapted to implement a method according to any of the claims 1 to 13.

Fig. 1 a

reference shape        deformed shape

Fig. 1 b

Fig. 2 a

Fig. 2 b

Fig. 2 c

Fig. 3

EP 2 530 623 A1

Fig. 4

Fig. 5

Europäisches
Patentamt

European
Patent Office

Office européen
des brevets

# EUROPEAN SEARCH REPORT

Application Number

EP 11 16 8098

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RAMSAY DYER ET AL: "Spectral Methods for Mesh Processing and Analysis", COMPUTING, 1 January 2007 (2007-01-01), XP55005786, ISSN: 0010-485X, DOI: 10.1.1.132.8135 * Section 6.5, Section 7, Section 9 * | 1-6,9-15 | INV. G06K9/46 G06K9/00 G06K9/62 G06T7/00 |
| X | JIAN SUN ET AL: "A Concise and Provably Informative Multi-Scale Signature Based on Heat Diffusion", COMPUTER GRAPHICS FORUM, vol. 28, no. 5, 1 July 2009 (2009-07-01), pages 1383-1392, XP55005798, ISSN: 0167-7055, DOI: 10.1111/j.1467-8659.2009.01515.x * Section 2,3,4,5 * | 1-6,9-15 | |
| A | KATARZYNA GRABOWSKA ET AL: "The SchrÄdinger operator as a generalized Laplacian; The Schrodinger operator as a generalized Laplacian", JOURNAL OF PHYSICS A: MATHEMATICAL AND THEORETICAL, JOURNAL OF PHYSICS A: MATHEMATICAL AND THEORETICAL, BR, vol. 41, no. 14, 11 April 2008 (2008-04-11), page 145204, XP020140137, ISSN: 1751-8121 * abstract * | 1-15 | TECHNICAL FIELDS SEARCHED (IPC) G06K G06T |

-/--

The present search report has been drawn up for all claims

| Place of search | Date of completion of the search | Examiner |
|---|---|---|
| The Hague | 6 September 2011 | Boltz, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 11 16 8098

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GILBOA G ET AL: "Image Enhancement and Denoising by Complex Diffusion Processes", IEEE TRANSACTIONS ON PATTERN ANALYSIS AND MACHINE INTELLIGENCE, IEEE SERVICE CENTER, LOS ALAMITOS, CA, US, vol. 26, no. 8, 1 August 2004 (2004-08-01) , pages 1020-1036, XP011114227, ISSN: 0162-8828, DOI: 10.1109/TPAMI.2004.47 * Section II, page 1021, Equation 3 * ----- | 1-15 | |
| T | Aubry: "Pose-Consistent 3D Shape Segmentation Based on a Quantum Mechanical Feature Descriptor", DAGM 2011, 33rd annual symposium on pattern recognition, 29 August 2011 (2011-08-29), pages 1-10, XP55005791, Retrieved from the Internet: URL:http://cvpr.in.tum.de/_media/spezial/bib/asc_dagm11.pdf [retrieved on 2011-08-30] * the whole document * ----- | | |

TECHNICAL FIELDS SEARCHED (IPC)

The present search report has been drawn up for all claims

| Place of search | Date of completion of the search | Examiner |
|---|---|---|
| The Hague | 6 September 2011 | Boltz, Sylvain |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................

& : member of the same patent family, corresponding
document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **H. LING ; D. JACOBS.** Shape Classification Using the Inner-Distance. *IEEE Trans. Pattern Anal. Mach. Intell. (PAMI,* February 2007, vol. 29 (2), 286-299
- **Y. LIPMAN ; T. FUNKHOUSER.** Möbius voting for surface correspondence. *ACM Trans. Graph.,* February 2009, vol. 28 (3
- **Y. LIPMAN ; I. DAUBECHIES.** *Surface Comparison With Mass Transportation*
- **B. LÉVY.** Laplace-Beltrami eigenfunctions: Towards an Algorithm That. *Geometry,* February 2006
- **R. RUSTAMOV.** Laplace-Beltrami eigenfunctions for deformation invariant shape representation. *Proc. SGP,* February 2007
- **J. SUN ; M. OVSJANIKOV ; L. GUIBAS.** A Concise and Provably Informative Multi-Scale Signature Based on Heat Diffusion. *Comput. Graph. Forum,* February 2009, vol. 28 (5), 1383-1392
- **K. GEBAL ; J. BAERENTZEN ; H. AANAES ; R. LARSEN.** Shape Analysis Using the Auto Diffusion Function. *Comput. Graph. Forum,* February 2009, vol. 28 (5), 1405-1413
- **M. BRONSTEIN ; I. KOKKINOS.** Scale-invariant heat kernel signatures for non-rigid shape recognition. *Proc. ECCV,* February 2010
- **U. PINKALL ; K. POLTHIER.** Computing Discrete Minimal Surfaces and their Conjugates. *Exp. Math.,* 1993, vol. 2 (1), 15-36
- **M. MEYER.** Discrete Differential-Geometry Operators for Triangulated 2-Manifolds. *VisMath,* 2002
- **R. COIFMAN et al.** Geometric Diffusions as a Tool for Harmonic Analysis and Structure Definition of Data. Part I: Diffusion Maps. *Proc. of Nat. Acad. Sci.,* February 2005, vol. 102, 7426-7431